# EUROPEAN PATENT SPECIFICATION

(11) **EP 2 189 560 B1**
(45) Date of publication and mention of the grant of the patent: **07.03.2018**
(21) Application number: 08831260.8
(22) Date of filing: 04.09.2008
(51) Int. Cl.: D04B 37/02, G06F 17/50

(54) **DEVICE AND METHOD FOR DEBUGGING KNIT DESIGN AND DEBUG PROGRAM**
VORRICHTUNG UND VERFAHREN ZUR FEHLERENTFERNUNG BEI EINEM STRICKENTWURF UND FEHLERSUCHPROGRAMM
DISPOSITIF ET PROCÉDÉ DE DÉBOGAGE DE CONCEPTION DE TRICOT ET PROGRAMME DE DÉBOGAGE ASSOCIÉ

(30) Priority: 10.09.2007 JP 2007233611
(43) Date of publication of application: 26.05.2010
(73) Proprietor: Shima Seiki Manufacturing., Ltd., Wakayama-shi, Wakayama 641-0003 (JP)
(72) Inventor: TERAI, Koichi, Wakayama-shi Wakayama 641-0003 (JP)
(74) Representative: Carstens, Dirk Wilhelm
(86) International application number: PCT/JP2008/065954
(87) International publication number: WO 2009/034910

(56) References cited:
- EP-A1- 0 640 707
- EP-A1- 1 452 985
- EP-A1- 1 900 862
- JP-A- 2000 027 055
- JP-A- 2001 032 153
- JP-A- 2006 291 426
- JP-B2- 2 656 405
- JP-B2- 2 678 228
- US-B1- 6 611 730
- CHI-HO CHAN ET AL: "Fabric Defect Detection by Fourier Analysis", IEEE TRANSACTIONS ON INDUSTRY APPLICATIONS, IEEE SERVICE CENTER, PISCATAWAY, NJ, US, vol. 36, no. 5, 1 September 2000 (2000-09-01), XP011022830, ISSN: 0093-9994
- DUHOVIC M ET AL: "Simulating the deformation mechanisms of knitted fabric composites", COMPOSITES PART A: APPLIED SCIENCE AND MANUFACTURING, ELSEVIER SCIENCE PUBLISHERS B.V., AMSTERDAM, NL, vol. 37, no. 11, 1 November 2006 (2006-11-01), pages 1897-1915, XP025153604, ISSN: 1359-835X, DOI: 10.1016/J.COMPOSITESA.2005.12.029 [retrieved on 2006-11-01]

## Description

The present invention relates to a technology for debugging a knit design.

The technology for interactively designing a knit product on a color monitor, converting the design result into knitting data that can be executed by a flat knitting machine, and then simulating the finished knit product has been known (Patent Document 1: Japanese Patent No. 2678228). The inventor has considered detecting from design data of the knit product a section that cannot be knitted easily, as a bug (flaw). By detecting the bug at the time of designing, the time required for discovering the bug after transforming from designing into mass production and then correcting the design data can be saved. Moreover, manual correction of a knitted fabric is no longer required. Additionally, a needle can be prevented from being damaged by a forcible operation.

Within the bug of the design data, collision between carriers supplying yarns and excessively long racking length between front and back needle beds can be easily detected. However, the technology for automatically detecting a forcible operation on the needle where multiple stitches are transferred or the like has not been known. Also, the technology for automatically detecting a flaw in which a stitch unravels when knitting is performed according to knitting data has not been known. Unraveling of stitches usually occurs due to the relationship with the surrounding stitches and cannot be detected unless the knitting data is analyzed based on the relationship between the unraveling stitches and the surrounding stitches. Even when the same design data is used, sometimes knitting cannot be performed, depending on the knitting yarn. Moreover, even if the part numbers of knitting yarns are the same, knitting cannot be performed due to the lot difference in the knitting yarns and the environment where the knitting machine is placed. In the prior art, an unstable section cannot be detected in such a knitting condition. Furthermore, it is difficult to check the design data manually with a smaller gauge or a complicated design. For example, some knitted fabrics have hundreds of thousands of stitches, and therefore it is hard to check such knitted fabrics manually on the basis of design data or a sample knitted fabric.
Patent Document 1: Japanese Patent No. 2678228

Prior art document WO 2006/126453 A1 discloses a knit simulation method according to which the presence or absence of putting round of a yarn is detected according to whether carriers are positioned on a near side or a far side and according to the relationship of connection between loops, and the result is displayed on a monitor. On the monitor, for example, the degree of the deformation of the yarn is changed according to the presence of absence of putting round when the yarn is touched, or a color is changed according to the presence or absence of putting round.

The invention solves the problem of automatically detecting bugs in the design data of a knit product by the features of the independent claims 1, 4 and 5.

It is preferred that the debugging device be further provided with:
knitted fabric data storage means for storing an array of stitches pressed off from the needle of the virtual needle bed; and
image creation means for creating an image in which a section with a flaw detected by the detection means is marked on the stored array of the stitches.

It is particularly preferred that the design data be design data of a cylindrical knitted fabric, and that,
in order to create a 3D image in which some of the stitches stored in the knitted fabric data storage means are contained in a display area, the image creation means extract, from the stitches stored in the knitted fabric data storage means, a stitch having a reference position contained in the display area, and a stitch in which a line connecting a starting point and tip ends collides with the display area, and create an image containing the extracted stitches. The reference position is, for example, the starting point or tip end of the stitch, or a midpoint therebetween.

It is also preferred that the flaw-related-data include at least transferring a stitch by using the needle hooked with a plurality of stitches, and forming a stitch on an empty needle and forming a subsequent stitch on the formed stitch.

In this specification, the descriptions of the debugging device apply directly to the descriptions of the debugging method and the debugging program, and the descriptions of the debugging method or the debugging program apply directly to the descriptions of the debugging device. The terms "bug" and "flaw" are synonyms, and a knitted fabric to be knitted may be a cylindrical knitted fabric, integral knitted fabric, or other types of knitted fabrics.

According to the present invention, flaws of design data can be detected automatically. Therefore, the work of visually checking the design data can be simplified, and a knitted fabric can be knitted using debugged design data.

By displaying the image in which flaws are marked on a knitted fabric, a user can easily understand the sections with the flaws and the detail thereof and correct the design data easily.

Especially by locally displaying the knitted fabric with the flaw sections in the middle, the individual stitches can be displayed and viewed in an enlarged manner. By extracting the stitch having its reference position contained in the display area, as well as the stitch in which the line connecting the starting point and the tip end collides with the display area, stitches to be displayed can be extracted in real time. As a result, the 3D image can be created in real time.

Transferring a stitch by using a needle hooked with a plurality of stitches, forming a stitch on an empty needle at an end part of the knitted fabric, and then forming a subsequent stitch on the previously formed stitch are bugs that are generated frequently. Debugging can be performed easily by storing these bugs as flaws.

Fig. 1 is a block diagram of a knit design apparatus according to an embodiment;
Fig. 2 is a block diagram of a debugging device according to the embodiment;
Fig. 3 is a block diagram of a 3D viewer according to the embodiment;
Fig. 4 is a flowchart showing a debugging algorithm according to the embodiment;
Fig. 5 is a flowchart showing a creation algorithm of a 3D viewer image according to the embodiment;
Fig. 6 is a block diagram showing a debugging program according to the embodiment;
Fig. 7 is a block diagram showing a creation program of the 3D viewer image according to the embodiment;
Fig. 8 is a diagram showing a stitch model according to the embodiment;
Fig. 9 is a perspective view showing the relationship between a cylindrical knitted fabric and a display area according to the embodiment;
Fig. 10 is a perspective view showing the display area according to the embodiment, wherein the cross section of the cylindrical knitted fabric is viewed downward;
Fig. 11 is a planar view showing the relationship between the display area and blocks of the knitted fabric according to the embodiment;
Fig. 12 is a perspective view showing the relationship between the display area and a block of the knitted fabric according to the embodiment; and
Fig. 13 is a diagram showing an example of the 3D viewer image according to the embodiment.

- 2: Knit design apparatus
- 4: Manual input
- 6: Data input/output
- 8: Color monitor
- 10: Color printer
- 12: Knit design part
- 14: Data converter
- 16: Loop simulator
- 18: Program memory
- 20: General-purpose memory
- 22: Image memory
- 24: Debugger
- 26: Virtual knitting machine
- 28: Needle bed motion tracing part
- 29: Racking motion tracing part
- 30: Carrier motion tracing part
- 32: Check table
- 34: Checker
- 36: Knitted fabric data storage unit
- 38: Flaw-related-data storage unit
- 40: 3D viewer
- 42: Zoom processor
- 44: View point converter
- 46: Region determination part
- 48: 3D rendering part
- 60: Debugging program
- 61: Check table creation instruction
- 62: Motion tracing instruction
- 63: Checking instruction
- 64: Kitted fabric data storage instruction
- 65: Display instruction
- 70: 3D viewer program
- 71: Display area determination instruction
- 72: Block division instruction
- 73: Stitch list creation instruction
- 74: Display mode selection instruction
- 75: Flaw section marking instruction
- 76: 3D image creation instruction
- 80: Stitch model
- 81: Starting point
- 82: Tip end
- 91: Front knitted fabric
- 92: Back knitted fabric
- 94 to 96: Display areas
- 100: Block center
- 101 to 112: Blocks
- 120 to 122: Stitches

The best mode for carrying out the present invention is described hereinafter.

### EMBODIMENT

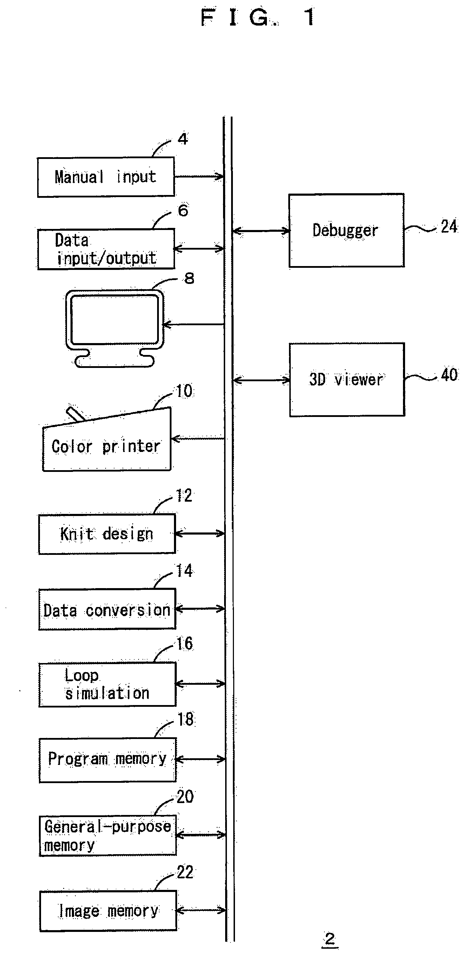

Figs. 1 to 13 show an embodiment. In Fig. 1, reference numeral 2 represents a knit design apparatus, and 4 a manual input, such as a keyboard, stylus, mouse, trackball, or joystick. A data input/output 6 inputs/outputs various data items and is configured by a disc driver or a network interface. A color monitor 8 and color printer 10 output various data items, such as design data of a knit product, simulation data of a finished knit product, and an image of a 3D viewer described hereinafter.

A knit design part 12 designs a knit product in response to the input from the data input/output 6 or the manual input 4. A data converter 14 converts the obtained design data into a knitting data that can be knitted by a flat knitting machine. A loop simulation 16 generates an image simulating a knitted fabric to be knitted, so as to display individual stitches based on the knitting data. A program memory 18 stores various programs of the knit design apparatus 2, and particularly stores a debugging program 60 and 3D viewer program 70 that are described hereinbelow. A general-purpose memory 20 stores various data items. An image memory 22 stores image data.

A debugger 24 detects a bug on the design data of the knit product and carries out debugging with the knitting data obtained by the data converter 14 as a target. A 3D viewer 40 generates a local 3D simulation image of the knitted fabric, such as a 3D simulation image of a section having the bug detected by the debugger 24 or of a section designated by the manual input 4. The 3D viewer 40 is characterized in generating, in real time, the simulation image of the knitted fabric within a narrow range in response to view point conversion. Note that the loop simulator 16 generates a simulation image of the entire knitted fabric but does not necessarily respond to the view point conversion in real time.

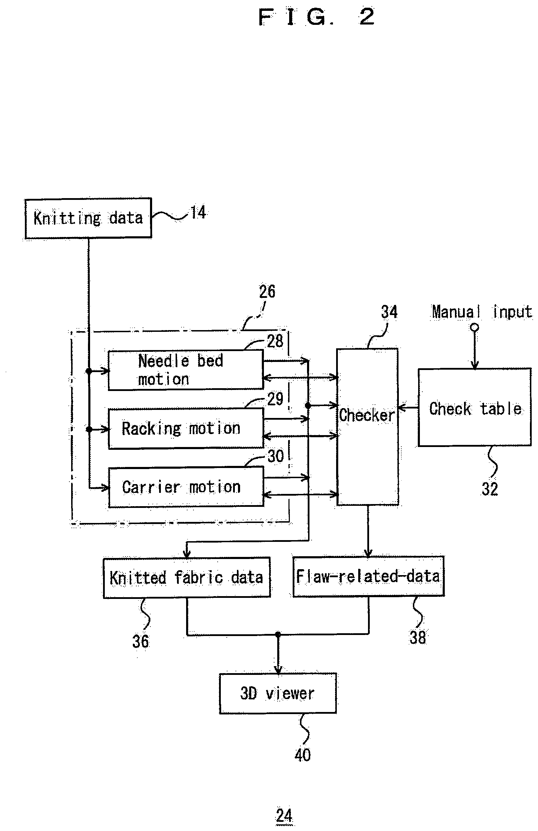

Fig. 2 shows a configuration of the debugger 24. Reference numeral 26 represents a virtual knitting machine. A needle bed motion tracing part 28 traces the conditions of the stitches hooked on individual needles of needle beds of the virtual knitting machine 26, and the motions of the needles. The conditions of the stitches include the IDs of the held stitches, the type of the stitches, such as knit, tuck and miss stitches, IDs of superposed stitches, the connection relation among upper, lower, left and right stitches, and a cumulative racking distance, that is, accumulation of racking data obtained from a position where the stitches are formed first. The motions of the needles include knit, tuck, miss and transfer, and the conditions of the stitches vary according to these motions. A racking motion tracing part 29 stores a racking history and the current racking distance. Racking means to shift the front and back needle beds relatively in a horizontal direction. A carrier motion tracing part 30 stores the current position and moving direction of each of a plurality of carriers supplying knitting yarns to the needle beds.

A check table 32 is a table having a description of bug data which relates to the motions of the needles, racking, and the movement of the carriers. The data of the check table 32 is supplied from, for example, the debugging program 60, and which part of the data is considered as a bug is designated based on manual input. In addition, the check table 32 stores only a minimum amount of bugs as standard, and a bug is added thereto by means of manual input. A checker 34 uses the check table 32 to check the condition of the stitches hooked on the needles, the motions of the needles, the racking motions, and the motions of the carriers, and then detects a bug. The detected bug is stored in a flaw-related-data storage unit 38.

The characteristics of the bugs that are stored in the check table 32 as standard are as follows:
a: Transfer is performed using the needles holding two or at least three stitches: the stitches can be dropped from the needles easily in the course of the transfer;
b: A yarn over or a tuck is formed at an end part of the knitted fabric, and the next stitch forms a stitch on the yarn over or tuck: the yarn over or tuck unravels;
c: The cumulative racking distance of the stitches is equal to or more than a predetermined length: even when each racking distance is within an allowable range, the stitches are moved significantly by accumulating the racking distances, which could cause yarn cutting;
d: The same stitches are transferred at least a predetermined number of times: this could cause yarn cutting;
e: When pressing off the stitches from the needles, there is a stitch connected adjacent to the stitches pressed off on the same needle bed. For example, the stitches adjacent to each other on the same needle bed are connected by the yarn. These stitches are pressed off from the needle: this could be a design error; and
f: Vertically connected stitches are shifted horizontally more than a predetermined number of times: this could cause yarn cutting.

In these operations, appropriate selection of a yarn and knitting conditions can prevent the occurrence of troubles and might produce an intentional design that is not a bug. In such a case, instead of automatically correcting the detected bug, it is preferred to display the detected bug and allow a user to correct the design data. The bugs of the paragraphs "b" and "f' can be detected by checking the stitches hooked on the needles and the stitches knitted at the end below the former stitches.

The flaw-related-data storage unit 38 stores data describing, for example, what kind of bug exists on a certain stitch. The flaw-related-data storage unit 38 also stores information indicating what kind of flaw is caused at a certain knitting stage. The needle bed motion tracing part 28 traces the condition of the needles of the needle beds in the virtual knitting machine 26. As a result, the types and positions of the stitches knitted by the virtual knitting machine 26 and the connection relation with the surrounding stitches can be found out and stored in a knitted fabric data storage unit 36. The stitch arrangement obtained here is constituted by two sides of the front knitted fabric and the back knitted fabric. Each of these sides is sectioned vertically and horizontally in a grid-like pattern, and a starting point and tip end of a stitch are provided at each intersection of the grids. The tip end is at the same position as a base point of an upper stitch. Instead of designating the positions of the stitches based on the intersections of the grids, a 3D coordinate of the base point or tip end of each stitch may be stored. The base point indicates the position where each stitch starts, and the tip end indicates the position where the stitch ends. These data can be held in any ways. Among the bugs, there is a bug that cannot be detected unless lower knitted stitches are checked. The data of the knitting data storage unit 36 are also read by the checker 34. The flaw-related-data or knitted fabric data is supplied to the 3D viewer 40, and a 3D image displaying, for example, the flaw-related-data is created.

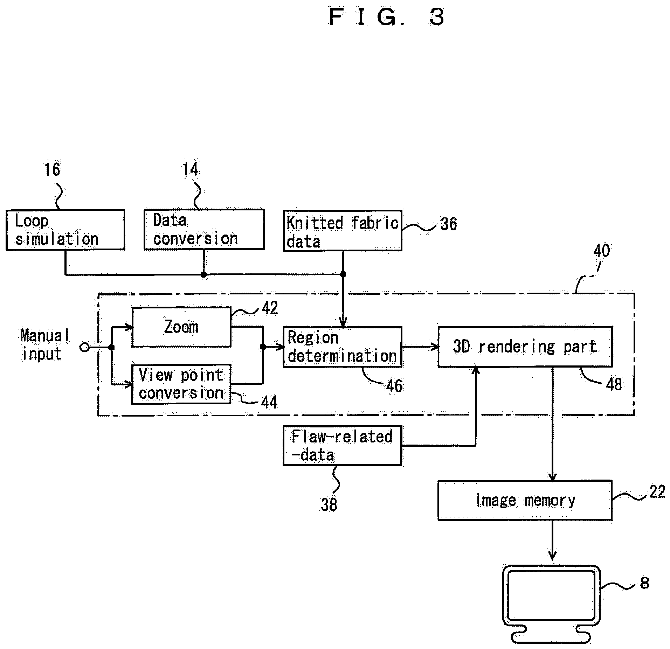

Fig. 3 shows a configuration of the 3D viewer 40. The 3D viewer 40 uses a 3D arrangement of the stitches obtained by the knitted fabric data storage unit 36, a 3D arrangement of the stitches obtained by the loop simulator 16, and data that is obtained by converting the knitting data obtained by the data converter 14 into stitch arrangements of the front and back knitted fabrics. Reference numeral 42 is a zoom processor for determining a display area by reducing/enlarging an image. A view point converter 44 moves the display area in response to view point conversion. The zoom processor 42 and the view point converter 44 are operated by a manual input and display a 3D image, such as an image in which the knitted fabric is disposed on a flat surface, an image of the cross section of the knitted fabric, and an image in which the knitted fabric is viewed obliquely. A region determination part 46 extracts stitches contained in the display area, from the stitches stored in the knitted fabric data storage unit 36. A 3D rendering part 48 displays the stitches of the display area three-dimensionally, and marks these stitches on a flaw section in accordance with the data of the flaw-related-data storage unit 38. This image does not have to be rendered. The created image is stored in the image memory 22 and output to the color monitor 8.

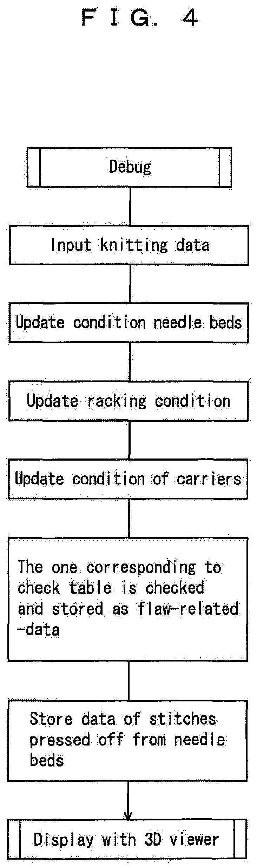

Fig. 4 shows a debugging algorithm. The knitting data is input, and consequently the condition of the stitches hooked on the needles of the needle beds, the racking condition, and the condition of the carriers are updated for each knitting operation. The data corresponding to the check table are checked in relation to these conditions and changes thereof. The data corresponding to the check table are stored as the flaw-related-data, and the data of the stitches pressed off from the needle beds are stored in the knitted fabric data storage unit 36.

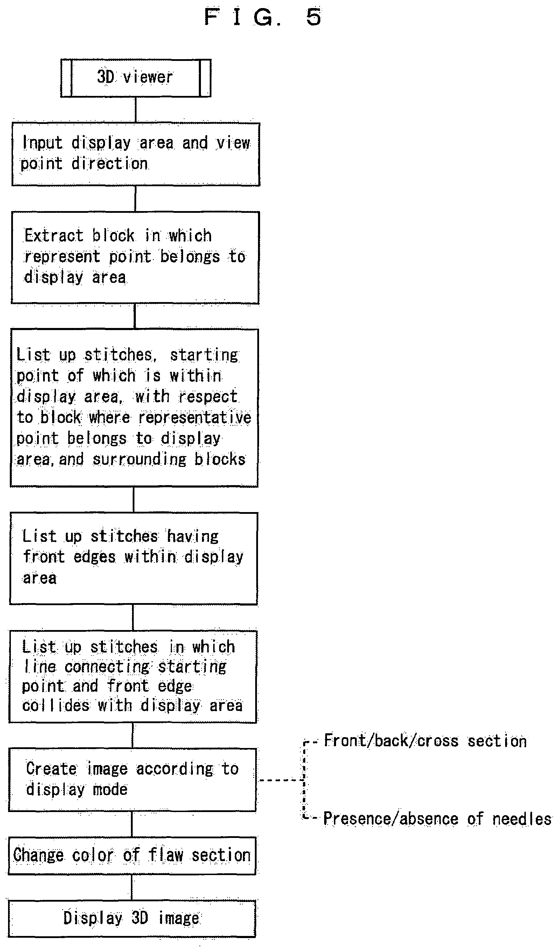

Fig. 5 shows the processing performed by the 3D viewer. An object of the processing performed by the 3D viewer is to create a list of the stitches of the display area at high speeds so that a local 3D image can be created in real time. When displaying flaw-related-data, the flaw-related-data is disposed near the center of the display area, for example. Furthermore, manual input can be utilized to input the center of the display area, the degree of image reduction/enlargement, the view point direction, and the display mode. The target knitted fabric is in the form of a cylinder, for example, and specifically a knitted fabric obtained by joining bodies and sleeves together without sewing them. The display area therefore includes a display area of the front knitted fabric and the display area of the back knitted fabric. The stitches that have the starting points in these display areas or the stitches in each of which the line connecting the starting point and the tip end collides with the display area are displayed on the 3D image.

The 3D arrangement of the stitches is found from the knitted fabric data storage unit 36 and the like. The arrangement of the stitches is divided into a plurality of blocks. The size of each block is, for example, 128 stitches × 128 stitches. Although the blocks are fixed in this embodiment, a block may be generated in accordance with the display area. The reason why the arrangement of the stitches is divided into blocks is to restrict the search range of the stitches contained in the display area.

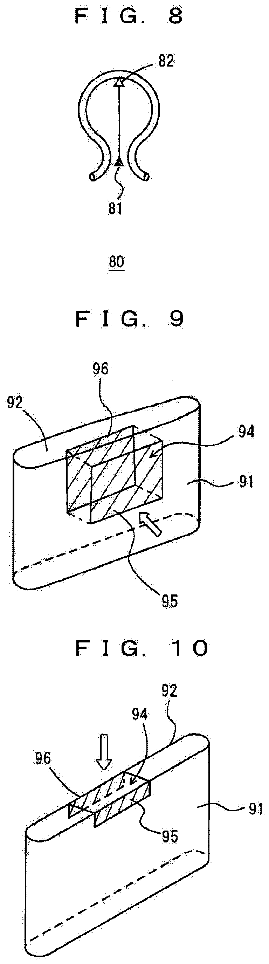

A block of stitches whose center is contained in the display area, and a block of stitches adjacent to the former block that has the starting point contained in the display area are listed. The meaning of the starting point is shown in a stitch model 80 of Fig. 8. Reference numeral 81 represents the starting point and 82 the tip end of the stitches. Whether the stitches are contained in the display area is determined based on whether a line connecting the starting point 81 to the tip end 82 collides with the display area or not. It should be noted that the position of the starting point 81 is stored in the knitted fabric data storage unit 36. The position of the tip end 82 is the position of the starting point of the next stitch (upper stitch) supported by the stitch model 80 shown in Fig. 8, and determined from the connection relation among the stitches. The positions of the starting point 81 and the tip end 82 may be defined with a certain degree of accuracy so that whether the stitches belong to the display area or not can be determined.

Fig. 9 shows the relationship between the cylindrical knitted fabric and the display area. Reference numeral 91 represents the front knitted fabric, 92 the back knitted fabric, 94 the overall display area for the front knitted fabric and the back knitted fabric, 95 a display area for the front knitted fabric, and 96 a display area for the back knitted fabric. When displaying the front of the front knitted fabric, the direction of the view point is as shown by the white arrow in the diagram. When displaying the back of the front knitted fabric, it is displayed with the view point that looks at the front knitted fabric side from the inside of the cylinder. A prolongation or the like that extends through the back of the knitted fabric can be displayed with jacquards.

Fig. 10 shows a display area in which the cross section of the knitted fabric is viewed downward, wherein the white arrow is the direction of the view point. The height directions of the display areas 94, 95 are relatively narrower than those shown in Fig. 9, and a prolongation between the display areas 94, 95 is also displayed. When displaying the needles, a state in which the stitches at the upper ends of each of the display areas are engaged with the needles is displayed.

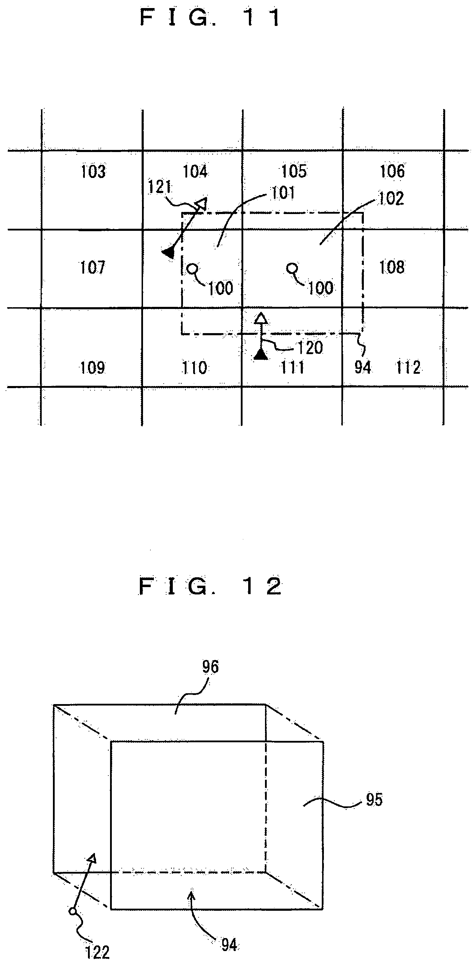

Fig. 11 shows the relationship between the display area and the blocks. The knitted fabric is divided into the plurality of blocks, each of which contains stitches in a size of, for example, approximately 16 stitches × 16 stitches to 256 stitches × 256 stitches, or preferably approximately 128 stitches × 128 stitches. A representative point 100 is defined for each block, and blocks 101, 102 having the representative point 100 belonging to the display area are extracted. The extracted blocks 101, 102 and the surrounding blocks, which are adjacent blocks 103 to 112, are obtained as display area processing targets. Then, determination is made on each of the stitches of the blocks 101 to 112 as to whether the starting point is contained in the display area, then whether the tip end is contained in the display area, and finally whether the line connecting the starting point and the tip end collides with any of the four sides of the display area. Any of these stitches is obtained as a display target. Reference numeral 120 represents a stitch that does not have the base point in the display area but has the tip end in the display area, while reference numeral 121 represents a stitch that does not have the base point or the tip end in the display area but has the line connecting them in the display area.

As long as the 3D coordinate of each of the four apexes of the display area is known, it is easy to determine whether the starting point or the tip end is contained in the display area or not. Next, by obtaining the intersections of a straight line which is the extension of the line connecting the starting point and the tip end of the stitches, and straight lines obtained by extending the four sides of the display area, collision between the line with the display area can be detected based on the presence of any of the intersections on the line and within the sides of the display area. In this way, the stitches within the display area are listed. Note that, in the block where the representative point is located in the vicinity of the center of the display area, all of the stitches might be considered existing within the display area. Furthermore, a process for determining the position of the tip end may be omitted, and a process for determining the position of the base point may be performed, followed by the collision determination. The range of the surrounding blocks is defined based on the relative size between each block and the display area. The range of the surrounding blocks can extend to the adjacent block or be between this adjacent block and the block outside thereof.

Fig. 12 shows an example of the prolongation. A stitch 122 has its base point in the front knitted fabric and tip end in the back knitted fabric. The base point does not belong to the display area, but the tip end belongs to the display area 96. In this case as well, the collision determination can extract the stitch 122. Creating the list of the stitches contained in the display area in this manner enables to select the display mode in which the knitted fabric is displayed in a planar view/horizontal cross-sectional view, or in which the knitted fabric is displayed with/without the needles of the needle beds. Note that the latter option of displaying the knitted fabric with the needles of the needle beds may not be provided. Next, a process for changing the color is carried out on the stitches of the flaw section, and thus obtained 3D image is displayed on the color monitor.

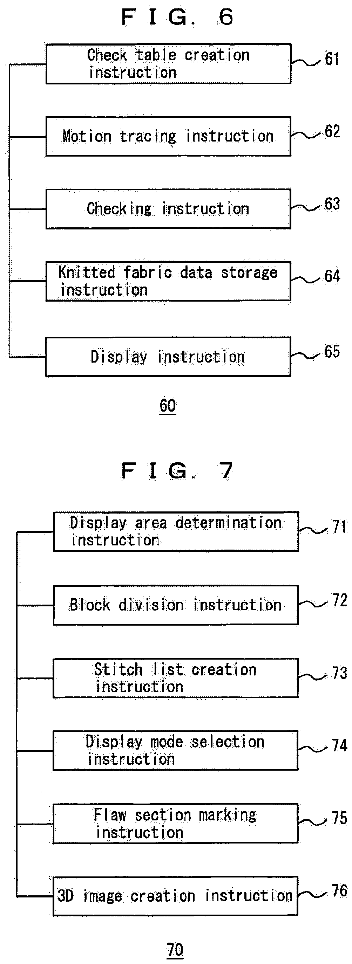

Fig. 6 shows the debugging program 60, and Fig. 7 the 3D viewer program 70. These programs are stored by means of a carrier wave or within a CD-ROM or other storage medium and supplied to the data input/output 6. In Fig. 6, reference numeral 61 represents a check table creation instruction for creating a table for checking flaws, in the knit design apparatus configured by a computer. A motion tracing instruction 62 creates the virtual knitting machine 26 within the knit design apparatus, and traces the condition of the needles of the needle beds, the racking condition, and the condition of the carriers. A checking instruction 63 causes the knit design apparatus to execute checking of the condition of the needles of the needle beds, the racking condition and the condition of the carriers by means of the data of the table of the check table creation instruction 61, and then to store the result of detecting flaws. A knitted fabric data storage instruction 64 stores the data of the stitches pressed off from the needles of the needle beds, in the memory of the knit design apparatus. A display instruction 65 turns over the detection result to the 3D viewer program 70 or the like and displays the detection result on the monitor.

Fig. 7 shows the 3D viewer program 70. Reference numeral 71 represents a display area determination instruction for determining the display area in response to an input of the view point or a zoom command, and a block division instruction 72 divides the knitted fabric data into the plurality of blocks. Note that the blocks may be divided every time the display area is designated. Each of the blocks may have a fixed size in relation to the knitted fabric data, and therefore the display area may or may not be changed. A stitch list creation instruction 73 creates a list of the stitches contained in the display area. A display mode selection instruction 74 receives a selected display mode indicating whether the knitted fabric is displayed in a planar view or cross-sectional view, and performs a process associated with it. A flaw section marking instruction 75 marks a section having flaw knitting data. A 3D image creation instruction 76 creates a 3D image so that a flaw section can be marked on the listed stitches.

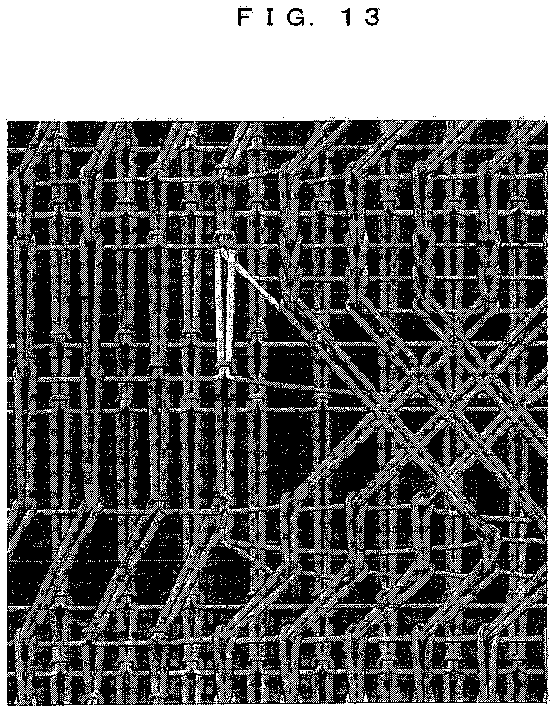

Fig. 13 shows an example of a display image of the 3D viewer, wherein a stitch whose knitting data has a bug is distinguished from other stitches. A flaw here is that a double stitch is transferred. The stitch on the left-hand side of this double stitch is subjected to single stitch transfer, and only the flaw stitch is subjected to double stitch transfer, thus the flaw cannot be noticed easily. Transferring the double stitch might cause a stitch to be dropped from the needles during the transfer, depending on the yarn used. The 3D viewer can reduce/enlarge the display area, convert the view point, and display the knitted fabric in a planar view or a cross-sectional view so that the user can understand the configuration of the knitted fabric immediately. When changing the design data, the design data can be changed by inputting a new design from the 3D viewer. Or, the design data is changed by moving the design from the 3D viewer to another screen on the color monitor.

The present embodiment can attain the following effects.
(1) The bugs of the design data of the knit product obtained by the flat knitting machine can be detected automatically. This can prevent troubles from occurring during the mass production, and simplify the work of manually checking a large number of stitches.
(2) Because the 3D viewer can determine the display area at high speeds, a 3D image of a required section can be provided in real time. Therefore, the design can be understood or changed easily.

In order to determine the range of stitches to be displayed, in the present embodiment a block where the representative point 100 belongs to the display area is extracted, and then whether stitches of the surrounding blocks are contained in the display range or not is determined. However, for example, the following process is possible as well. First, the knitted fabric is divided into a plurality of blocks with reference to the center of the display area. The size of each block is constant, for example. One block is made smaller than the display area, while nine blocks are made larger than the display area. The center of the central block is disposed in the vicinity of the center of the display area. As a result, the entire central block is contained in the display area. Next, blocks adjacent to the central block are detected. That is, a block in which the base point thereof is contained in the display area and a block in which the base point thereof is not contained in the display area but the line connecting the base point and the tip end collides with the four sides of the display area are detected.

## Claims

1. A debugging device (24) for debugging design data used by a flat knitting machine, the debugging device (24) comprising a virtual knitting machine (26), the virtual knitting machine (26) further comprising:
needle bed motion tracing means (28) for tracing the conditions of the stitches hooked on individual needles of needle beds of the virtual knitting machine (26), and the motions of the needles; racking motion tracing means (29) for storing a racking history and the current racking distance, wherein racking means shifts the front and back needle beds relatively in a horizontal direction, and racking is the relative movement between the front and back needle beds; and
carrier motion tracing means (30) for storing a current position and moving directions of each of a plurality of carriers supplying knitting yarns to the needle beds;
wherein the conditions of the stitches include the IDs of the stitches, the type of the stitches including knit, tuck and miss, IDs of superposed stitches, the connection relation among upper, lower, left and right stitches, and a cumulative racking distance from positions where the stitches are first formed; and wherein the motions of the needles include knit, tuck, miss and transfer and vary the conditions of the stitches; **characterised by**:
a check table (32) storing flaw-related-data with respect to the conditions of the stitches hooked on the needles, wherein the check table (32) stores at least the following as bugs:
a: transfer is performed using the needles holding two or at least three stitches;
b: a yarn over or a tuck is formed at an end part of the knitted fabric and the next stitch forms a stitch on the yarn over or tuck;
c: the cumulative racking distance of the stitches is equal to or more than a predetermined length the cumulative racking distance is accumulation of racking data obtained from a position where the stitches are formed first, traced by the needle bed tracing means (28);
d: the same stitches are transferred at least a predetermined number of times; and
e: when pressing off the stitches from the needles, there is a stitch connected adjacent to the stitches wiped on the same needle bed; and
f: vertically connected stitches are shifted horizontally more than a predetermined number of times;
detection means (34) for detecting the conditions of the stitches hooked on the needles or the motions of the needles, whichever corresponds to the bugs; and
display means (40) for displaying a result of detection performed by the detection means (34) with markings on the flaws locally for a part of the knitted fabric including the flaws.

2. The debugging device according to claim 1, further comprising:
knitted fabric data storage means (36) for storing an array of stitches wiped from the needle of the virtual needle bed; and
image creation means for creating an image for the result of the detection by the detection means (34) comprising only a part of the array of stitches with the markings on the flaws.

3. The debugging device according to claim 2, wherein
the design data is design data of a cylindrical knitted fabric, and,
in order to create a 3D image in which some of the stitches stored in the knitted fabric data storage means (36) are contained in a display area (94 to 96), the image creation means extracts, from the stitches stored in the knitted fabric data storage means (36), stitches having reference position contained in the display area (94 to 96), and stitches of which a line connecting starting points (81) and tip ends (82) collides with edges of display area (94 to 96), and create an image containing the extracted stitches.

4. A computer implemented debugging method for debugging design data used by a flat knitting machine, using a virtual knitting machine (26), the method comprising the steps of
tracing the needle bed motion for tracing the conditions of the stitches hooked on individual needles of needle beds of the virtual knitting machine (26), and the motions of the needles; tracing the racking motion and storing a racking history and the current racking distance, wherein racking means shifts the front and back needle beds relatively in a horizontal direction, and racking is the relative movement between the front and back needle beds; and tracing the motion of the carriers and storing a current position and moving directions of each of a plurality of carriers supplying knitting yarns to the needle beds;
wherein the conditions of the stitches include the IDs of the stitches, the type of the stitches including knit, tuck and miss, IDs of superposed stitches, the connection relation among upper, lower, left and right stitches, and a cumulative racking distance from positions where the stitches are first formed,
and wherein the motions of the needles include knit, tuck, miss and transfer and vary the conditions of the stitches; **characterised by**:
storing flaw-related-data with respect to the conditions of the stitches hooked on the needles, wherein at least the following as bugs are stored:
a: performing the transfer using the needles holding two or at least three stitches;
b: forming a yarn over or a tuck at an end part of the knitted fabric and the next stitch forms a stitch on the yarn over or tuck;
c: wherein the cumulative racking distance of the stitches is equal to or more than a predetermined length, the cumulative racking distance is accumulation of racking data obtained from a position where the stitches are formed first, traced by the needle bed tracing means (28);
d: transferring the same stitches at least a predetermined number of times;
e: when pressing off the stitches from the needles, connecting a stich adjacent to the stitches wiped on the same needle bed; and
f: shifting vertically connected stitches horizontally more than a predetermined number of times;
wherein the conditions of the stitches hooked on the needles or the motions of the needles, are detected whichever corresponds to the bugs; and
wherein a result of detection performed by the detecting step is displayed with markings on the flaws locally for a part of the knitted fabric including the flaws.

5. A debugging program (60) comprising instructions which, when the program is executed by a computer, cause the computer to carry out the method of claim 4.

## Patentansprüche

1. Fehlerbehebungsvorrichtung (24) für eine Fehlerbehebung in durch eine Flachstrickmaschine verwendeten Entwurfsdaten, wobei die Fehlerbehebungsvorrichtung (24) eine virtuelle Strickmaschine (26) umfasst, wobei die virtuelle Strickmaschine (26) weiterhin umfasst:
eine Nadelbettbewegungs-Verfolgungseinrichtung (28) zum Verfolgen der Zustände der an einzelnen Nadeln der Nadelbetten der virtuellen Strickmaschine (26) eingehakten Maschen und der Bewegungen der Nadeln,
eine Versatzbewegungs-Verfolgungseinrichtung (29) zum Speichern eines Versatzverlaufs und der aktuellen Versatzdistanz, wobei eine Versatzeinrichtung die vorderen und hinteren Nadelbetten relativ in einer horizontalen Richtung versetzt, und wobei der Versatz die relative Bewegung zwischen den vorderen und hinteren Nadelbetten ist, und
eine Trägerbewegungs-Verfolgungseinrichtung (30) zum Speichern der aktuellen Position und der Bewegungsrichtungen jedes aus einer Vielzahl von Trägern, die Strickfäden zu den Nadelbetten zuführen,
wobei die Zustände der Maschen die IDs der Maschen, den Typ der Maschen wie etwa Strick-, Fang- oder Fehlmaschen, die IDs von überlagerten Maschen, die Verbindungsbeziehung zwischen oberen, unteren, linken und rechten Maschen und eine kumulative Versatzdistanz von Positionen, an denen die Maschen zuerst ausgebildet werden, umfassen, und
wobei die Bewegungen der Nadeln ein Stricken, Fangen, Fehlen und Umhängen umfassen und die Eigenschaften der Maschen verändern,
**gekennzeichnet durch**:
eine Prüftabelle (32), die fehlerbezogene Daten in Bezug auf die Eigenschaften bzw. Zustände der an den Nadeln eingehakten Maschen speichert, wobei die Prüftabelle (32) wenigstens die folgenden Fehler speichert:
a: eine Umhängung wird unter Verwendung der Nadeln durchgeführt, die zwei oder wenigstens drei Maschen halten,
b: eine Fadenüberführung oder ein Fangen wird an einem Endteil des Gestricks durchgeführt, und die nächste Masche bildet eine Masche an der Fadenüberführung oder dem Fangen,
c: die kumulative Versatzdistanz der Maschen ist gleich oder größer als eine vorbestimmte Länge, wobei die kumulative Versatzdistanz eine Akkumulation von Versatzdaten ist, die von einer Position, an welcher die Maschen zuerst gebildet werden, erhalten werden, was durch die Nadelbettverfolgungseinrichtung (28) verfolgt wird,
d: die gleichen Maschen werden mit wenigstens einer vorbestimmten Anzahl von Wiederholungen umgehängt, und
e: wenn die Maschen von den Nadeln gedrückt werden, ist eine in Nachbarschaft zu den auf dem gleichen Nadelbett aufgenommenen Maschen verbundene Masche vorhanden, und
f: vertikal verbundene Maschen werden horizontal für mehr als eine vorbestimmte Anzahl von Wiederholungen verschoben,
eine Erfassungseinrichtung (34) zum Erfassen der Zustände der an den Nadeln eingehakten Maschen oder der Bewegungen der Nadeln, je nachdem was den Fehlern entspricht, und
eine Anzeigeeinrichtung (40) zum Anzeigen des Ergebnisses der durch die Erfassungseinrichtung (34) durchgeführten Erfassung mit Markierungen an den Fehlern lokal für einen die Fehler enthaltenden Teil des Gestricks.

2. Fehlerbehebungsvorrichtung nach Anspruch 1, die weiterhin umfasst:
eine Gestrickdaten-Speichereinrichtung (36) zum Speichern einer Anordnung von Maschen, die von der Nadel des virtuellen Nadelbetts abgestreift werden, und
eine Bilderzeugungseinrichtung zum Erzeugen eines Bilds für das Ergebnis der durch die Erfassungseinrichtung (34) durchgeführten Erfassung, das nur einen Teil der Anordnung von Maschen mit den Markierungen an den Fehlern umfasst.

3. Fehlerbehebungsvorrichtung nach Anspruch 2, wobei:
die Entwurfsdaten Entwurfsdaten eines zylindrischen Gestricks sind, und
um ein 3D-Bild zu erzeugen, in dem einige der in der Gestrickdaten-Speichereinrichtung (36) gespeicherten Maschen in einem Anzeigebereich (94 bis 96) enthalten sind, extrahiert die Bilderzeugungseinrichtung von den Maschen, die in der Gestrickdaten-Speichereinrichtung (36) gespeichert sind, Maschen mit einer in dem Anzeigebereich (94 bis 96) enthaltenen Bezugsposition und Maschen, bei denen eine Startpunkte (84) mit Endpunkten (82) verbindende Linie mit Rändern eines Anzeigebereichs (94 bis 96) kollidiert, und erzeugt ein die extrahierten Maschen enthaltendes Bild.

4. Computerimplementiertes Fehlerbehebungsverfahren für eine Fehlerbehebung in durch eine Flachstrickmaschine verwendeten Daten unter Verwendung einer virtuellen Strickmaschine (26), wobei das Verfahren die folgenden Schritte umfasst:
Verfolgen der Nadelbettbewegung für das Verfolgen der Zustände der an einzelnen Nadeln der Nadelbetten der virtuellen Strickmaschine (26) eingehakten Maschen und der Bewegungen der Nadeln,
Verfolgen der Versatzbewegung und Speichern eines Versatzverlaufs und der aktuellen Versatzdistanz, wobei die Versatzeinrichtung die vorderen und hinteren Nadelbetten relativ in einer horizontalen Richtung versetzt, und wobei das Versetzen die relative Bewegung zwischen den vorderen und hinteren Nadelbetten ist, und
Verfolgen der Bewegung der Träger und Speichern der aktuellen Position und der Bewegungsrichtungen jedes aus einer Vielzahl von Trägern, die Strickfäden zu den Nadelbetten zuführen,
wobei die Zustände der Maschen die IDs der Maschen, den Typ der Maschen wie etwa Strick-, Fang- oder Fehlmaschen, die IDs von überlagerten Maschen, die Verbindungsbeziehung zwischen oberen, unteren, linken und rechten Maschen und eine kumulative Versatzdistanz von Positionen, an denen die Maschen zuerst ausgebildet werden, umfassen, und
wobei die Bewegungen der Nadeln ein Stricken, Fangen, Fehlen und Umhängen umfassen und die Eigenschaften der Maschen verändern,
**gekennzeichnet durch**:
Speichern von fehlerbezogenen Daten in Bezug auf die Eigenschaften der an den Nadeln eingehakten Maschen, wobei wenigstens die folgenden Fehler gespeichert werden:
a: eine Umhängung wird unter Verwendung der Nadeln durchgeführt, die zwei oder wenigstens drei Maschen halten,
b: eine Fadenüberführung oder ein Fangen wird an einem Endteil des Gestricks durchgeführt, und die nächste Masche bildet eine Masche an der Fadenüberführung oder dem Fangen,
c: die kumulative Versatzdistanz der Maschen ist gleich oder größer als eine vorbestimmte Länge, wobei die kumulative Versatzdistanz eine Akkumulation von Versatzdaten ist, die von einer Position, an welcher die Maschen zuerst gebildet werden, erhalten werden, was durch die Nadelbettverfolgungseinrichtung (28) verfolgt wird,
d: die gleichen Maschen werden mit wenigstens einer vorbestimmten Anzahl von Wiederholungen umgehängt, und
e: wenn die Maschen von den Nadeln gedrückt werden, ist eine Masche in Nachbarschaft zu den auf dem gleichen Nadelbett aufgenommenen Maschen vorhanden, und
f: vertikal verbundene Maschen werden horizontal für mehr als eine vorbestimmte Anzahl von Wiederholungen verschoben,
wobei die Eigenschaften der an den Nadeln eingehakten Maschen oder die Bewegungen der Nadeln erfasst werden, je nachdem was den Fehlern entspricht, und
wobei das Ergebnis der durch den Erfassungsschritt durchgeführten Erfassung mit Markierungen an den Fehlern lokal für einen die Fehler enthaltenden Teil des Gestricks angezeigt wird.

5. Fehlerbehebungsprogramm (60), das Befehle umfasst, die bei der Ausführung des Programms durch einen Computer veranlassen, dass der Computer das Verfahren von Anspruch 4 durchführt.

## Revendications

1. Dispositif de débogage (24) pour déboguer des données de conception utilisées par une machine à tricoter à plat, le dispositif de débogage (24) comprenant une machine à tricoter virtuelle (26), la machine à tricoter virtuelle (26) comprenant en outre :
des moyens de traçage de mouvement de fonture (28) pour tracer les conditions des mailles accrochées sur des aiguilles individuelles de fontures de la machine à tricoter virtuelle (26), et les mouvements des aiguilles ;
des moyens de traçage de mouvement de décalage (29) pour mémoriser un historique de décalage et la distance de décalage courante, des moyens de décalage décalant les fontures avant et arrière relativement dans une direction horizontale, et le mouvement de décalage étant un mouvement relatif entre les fontures avant et arrière ; et
des moyens de traçage de mouvement de porteurs de fil (30) pour mémoriser une position courante et des directions de mouvement de chacun d'une pluralité de porteurs de fil fournissant des fils à tricoter aux aiguilles à tricoter ;
dans lequel les conditions des mailles comprennent les identifiants des mailles, le type de la maille comprenant tricoté, rentré et manqué, des identifiants de mailles superposées, la relation de connexion entre les mailles supérieure, inférieure, gauche et droite, et une distance de décalage cumulée à partir de positions où les mailles sont formées en premier ;
et dans lequel les mouvements des aiguilles comprennent tricotage, rentré, manque et transfert et font varier les conditions des mailles ;
**caractérisé par** :
une table de vérification (32) mémorisant des données associées à des défauts en ce qui concerne les conditions des mailles accrochées sur les aiguilles, dans lequel la table de vérification (32) mémorise au moins les événements suivants comme des bogues :
a : un transfert est réalisé en utilisant les aiguilles maintenant deux ou au moins trois mailles ;
b : un fil par-dessus ou rentré est formé au niveau d'une partie d'extrémité du tissu tricoté et la maille suivante forme une maille sur le fil par-dessus ou rentré ;
c : la distance de décalage cumulée des mailles est égale ou supérieure à une longueur prédéterminée, la distance de décalage cumulée étant l'accumulation de données de décalage obtenues à partir d'une position où les mailles sont formées en premier, tracée par les moyens de traçage de fonture (28) ;
d : les mêmes mailles sont transférées au moins un nombre de fois prédéterminé ; et
e : lors du pressage des mailles hors des aiguilles, il y a une maille connectée adjacente aux mailles effacées sur la même fonture ; et
f : des mailles connectées verticalement sont décalées horizontalement plus qu'un nombre de fois prédéterminé ;
des moyens de détection (34) pour détecter les conditions des mailles accrochées sur les aiguilles ou les mouvements des aiguilles, qui correspondent aux bogues ; et
des moyens d'affichage (40) pour afficher un résultat de la détection réalisée par les moyens de détection (34) avec des marquages sur les défauts localement pour une partie du tissu tricoté comprenant les défauts.

2. Dispositif de débogage selon la revendication 1, comprenant en outre :
des moyens de stockage de données de tissu tricoté (36) pour stocker un réseau de mailles effacées à partir de l'aiguille de la fonture virtuelle ; et
des moyens de création d'image pour créer une image pour le résultat de la détection par les moyens de détection (34) comprenant seulement une partie du réseau de mailles avec les marquages sur les défauts.

3. Dispositif de débogage selon la revendication 2, dans lequel
les données de conception sont des données de conception d'un tissu tricoté cylindrique, et
afin de créer une image 3D dans laquelle certaines des mailles stockées dans les moyens de stockage de données de tissu tricoté (36) sont contenues dans une région d'affichage (94 à 96), les moyens de création d'image extraient, à partir des mailles stockées dans les moyens de stockage de données de tissu tricoté (36), des mailles ayant une position de référence contenue dans la région d'affichage (94 à 96), et des mailles dont une ligne connectant des points de départ (81) et des extrémités de pointe (82) entrent en collision avec des bords de la région d'affichage (94 à 96), et créent une image contenant les mailles extraites.

4. Procédé de débogage mis en oeuvre sur un ordinateur pour déboguer des données de conception utilisées par une machine à tricoter à plat, en utilisant une machine à tricoter virtuelle (26), le procédé comprenant les étapes suivantes :
tracer le mouvement de fonture pour tracer les conditions des mailles accrochées sur des aiguilles individuelles de fontures de la machine à tricoter virtuelle (26), et les mouvements des aiguilles ;
tracer le mouvement de décalage et mémoriser un historique de décalage et la distance de décalage courante, les moyens de décalage décalant les fontures avant et arrière relativement dans une direction horizontale, et le mouvement de décalage étant un mouvement relatif entre les fontures avant et arrière ; et
tracer le mouvement des porteurs de fil et mémoriser une position courante et des directions de mouvement de chacun d'une pluralité de porteurs de fil fournissant des fils à tricoter aux aiguilles à tricoter ;
dans lequel les conditions des mailles comprennent les identifiants des mailles, le type de la maille comprenant tricoté, rentré et manqué, des identifiants de mailles superposées, la relation de connexion entre les mailles supérieure, inférieure, gauche et droite, et une distance de décalage cumulée à partir de positions où les mailles sont formées en premier ;
et dans lequel les mouvements des aiguilles comprennent tricotage, rentré, manque et transfert et font varier les conditions des mailles ;
**caractérisé par** :
la mémorisation de données associées à des défauts en ce qui concerne les conditions des mailles accrochées sur les aiguilles, dans lequel les événements suivants sont mémorisés comme des bogues :
a : réalisation du transfert en utilisant les aiguilles maintenant deux ou au moins trois mailles ;
b : formation d'un fil par-dessus ou rentré au niveau d'une partie d'extrémité du tissu tricoté et la maille suivante forme une maille sur le fil par-dessus ou rentré ;
c : dans lequel la distance de décalage cumulée des mailles est égale ou supérieure à une longueur prédéterminée, la distance de décalage cumulée étant l'accumulation de données de décalage obtenues à partir d'une position où les mailles sont formées en premier, tracée par les moyens de traçage de fonture (28) ;
d : transfert des mêmes mailles au moins un nombre de fois prédéterminé ; et
e : lors du pressage des mailles hors des aiguilles, connexion d'une maille adjacente aux mailles effacées sur la même fonture ; et
f : décalage des mailles connectées verticalement horizontalement plus qu'un nombre de fois prédéterminé ;
dans lequel les conditions des mailles accrochées sur les aiguilles ou les mouvements des aiguilles, qui correspondent aux bogues, sont détectés ; et
dans lequel un résultat de la détection réalisée par l'étape de détection est affiché avec des marquages sur les défauts localement pour une partie du tissu tricoté comprenant les défauts.

5. Programme de débogage (60) comprenant des instructions qui, lorsque le programme est exécuté par un ordinateur, amènent l'ordinateur à réaliser le procédé selon la revendication 4.
